# EUROPEAN PATENT APPLICATION

(11) **EP 1 566 098 A2**
(43) Date of publication of application: **24.08.2005**
(21) Application number: 05076027.1
(22) Date of filing: 29.10.2002
(51) Int. Cl.: A01J 9/00

(54) **An assembly of a milk tank and a measuring probe**

(30) Priority: 05.12.2001 NL 1019496
(62) Divisional of application: 02079494.7
(71) Applicant: Lely Enterprises AG, 6300 ZUG (CH)
(72) Inventor: Veenstra, Aalze, 2805 SJ Gouda (NL)
(74) Representative: Corten, Maurice Jean F.M.

(57) **Abstract**

An assembly of a milk tank (1) and a measuring probe (2). The milk tank is provided with a space (3) for containing milk and with a wall (4) having a manhole portion (5) defining a manhole. The measuring probe extends into the space of the milk tank. The assembly comprises a cover (8) with which the manhole can be closed. The measuring probe can be fastened to the cover.

## Description

The invention relates to an assembly of a milk tank and a measuring probe, the milk tank being provided with a space for containing milk and with a wall having a manhole portion defining a manhole, and the measuring probe extending into the space of the milk tank.

Such an assembly is known for example from European patent application EP 0682 471. In this assembly the measuring probe is fastened to the bottom of the milk tank. When the measuring probe has to be repaired or checked, it is rather cumbersome to remove the measuring probe from the milk tank.

One object of the present invention is to provide an assembly of a milk tank and a measuring probe, in which it is possible to perform checking, repairing and, if desired, replacing of the measuring probe in a simple manner.

To this end, an assembly of the type described above according to the invention comprises a cover, the manhole being able to be closed by means of a cover, and the measuring probe being able to be fastened to the cover. Such a measuring probe can conduct the data to outside the milk tank via usual cables, or by wireless transmission, for example by inductive transmission through the wall. This transmission can also be applied with measuring probes belonging to different assemblies than that according to the invention.

The invention also relates to an assembly of a milk tank and a measuring probe, the milk tank being provided with a space for containing milk and with a wall having a manhole portion defining a manhole, and the measuring probe extending into the space of the milk tank, characterized in that the measuring probe comprises a float, so that the float with the measuring probe can float on liquid present in the milk tank. In this case, the data transmission can take place via a transmitter on the float or directly through the wall of the milk tank (for example inductive transmission) or to a receiver, disposed for example in the cover, from which the data are further conducted, for example via a cable.

The invention also relates to an assembly of a milk tank and a measuring probe, the milk tank being provided with a space for containing milk and with a wall having a manhole portion defining a manhole, and the measuring probe extending into the space of the milk tank, characterized in that the measuring probe is suitable for measuring the penicillin content of the milk present in the milk tank.

It will be obvious that the invention also relates to an assembly of a milk tank and a measuring probe, the milk tank being provided with a space for containing milk and with a wall having a portion defining an aperture (different from a manhole), and the measuring probe extending into the space of the milk tank, characterized in that the assembly comprises a fastening device for fastening the measuring probe to at least a part of the portion. Apart from the manhole, there are other standard apertures in a milk tank, such as an extension piece. Also by fastening the measuring probe to the aperture portion in this way, there need not be provided on the milk tank an extra device only for fastening the measuring probe. It will be obvious that, whenever possible, also the particular embodiments according to the subclaims apply to these further aspects of the invention.

Measuring probes that measure the aforementioned characteristics by contact, may also be applied. In this connection, measuring probes that measure the conductivity, the pH, the fat content, the protein content or the penicillin content and the like, may for example be taken into consideration.

The invention will be explained hereinafter in greater detail with reference to an exemplary embodiment illustrated in the drawing, in which:
Figure 1 shows diagrammatically in side view an assembly of a milk tank and a measuring probe,
Figure 2 shows diagrammatically a fastening device comprising a C-shaped profile section,
Figure 3 shows diagrammatically in a perspective view an assembly of a milk tank and a fastening device in the form of an oval profile section, and
Figure 4 is a cross-sectional view of Figure 3.

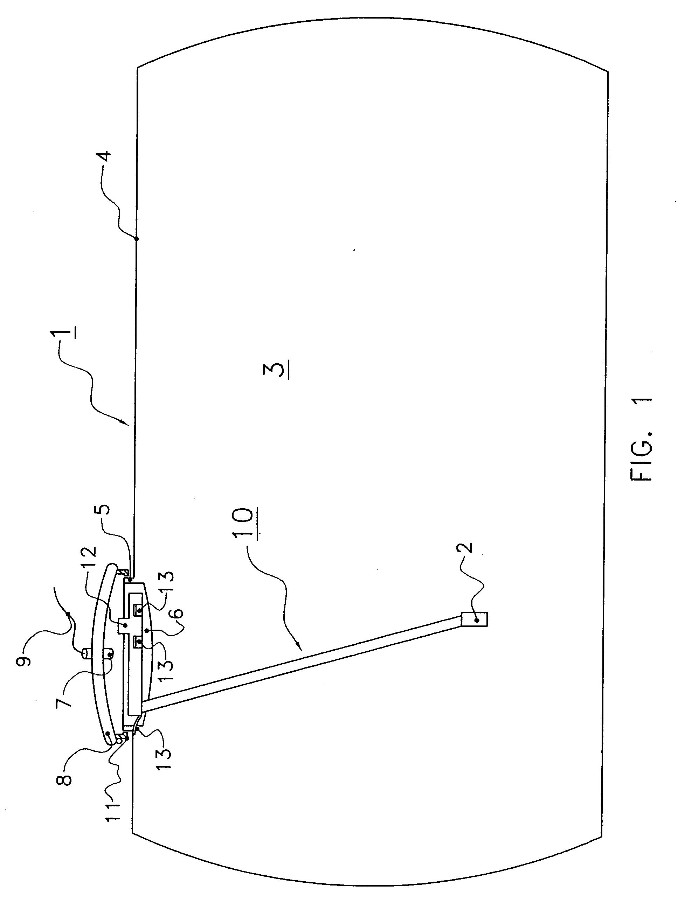

An assembly of a milk tank 1 and a measuring probe 2 is shown diagrammatically in side view in Figure 1. The milk tank 1 is provided with a space 3 for containing milk. In the case that the milk tank 1 is cleaned, it is possible for the space 3 to contain cleaning liquid. The milk tank 1 further has a wall 4. The wall 4 is provided with an aperture portion for a usual aperture in the wall 4, in the embodiment shown constituted by a manhole portion 5 defining a manhole 6. The measuring probe 2 is at least partially located in the space 3 of the milk tank 1.

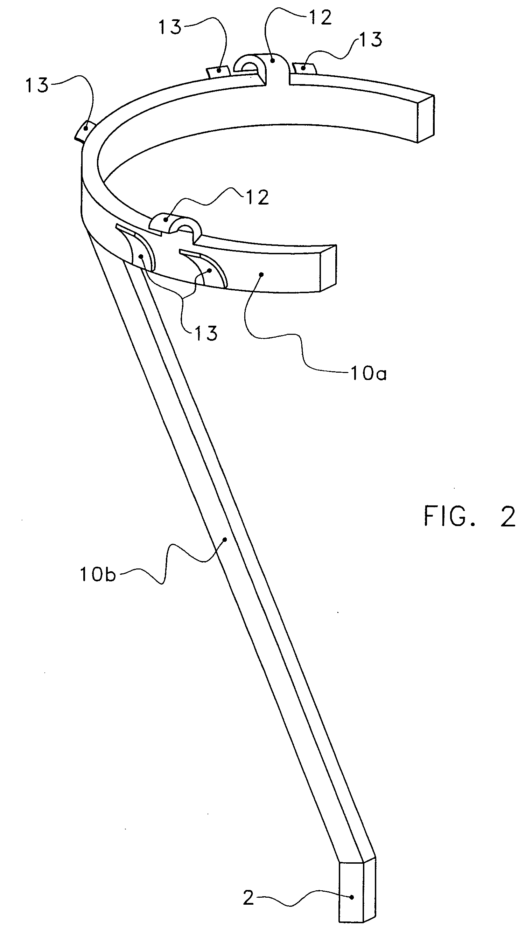

The measuring probe may be disposed on a float that is capable of floating on a liquid present in the milk tank. Such a measuring probe is preferably capable of transmitting the data obtained in a wireless manner, for example to a receiver 7 disposed on the inner side of a cover 8 closing the manhole 6. Said receiver is connected for example via a cable 9 to a computer for processing the data. Data transmission can also take place in an inductive manner through the wall 4. In particular if the measuring probe is a contactless measuring probe, i.e. a measuring probe that obtains measured values without physical contact with the liquid, the measuring probe can also be disposed on the inner side of the cover. Data can be obtained for example in an optical manner (picture processing, colour recognition), in an ultrasonic manner, via sound reflections, and via infrared or the like. In the embodiment shown in Figure 1, the assembly comprises a fastening device 10 for fastening the measuring probe 2 to at least a part of the manhole portion 5. The manhole portion 5 comprises a rim 11, which rim 11 extends in a direction away from the space 3. The fastening device 10, in the embodiment shown (see Figure 2) comprising a C-shaped profile section of flexible material, can be positioned between the cover 8 and the rim 11 of the manhole 6, and is thus kept between them by clamping. In the embodiment shown the C-shaped profile section is provided with two radial protrusions, each having a recess, (in particular hooks 12) intended for being engaged with the rim 11. In the assembled position of fastening device 10 and milk tank 1, the rim 11 is located in the recess. It will be obvious that the invention is not limited to two radial protrusions, but that any other number is applicable as well. Furthermore, the C-shaped profile section comprises clamping protrusions 13 that, in the assembled position, abut against the part of the manhole portion 5 that faces the space 3.

Because of the C-shaped profile section and due to the fact that the profile section is preferably made of flexible material, the fastening device 10 is suitable for being used with manholes with different diameters. Other profile sections or constructions of fastening devices having a size that can be adapted to the diameter of the manhole are also possible. In this connection, rings that telescope in respectively out may for example be taken into consideration.

In particular stainless steel is suitable as flexible material, although synthetic material is also appropriate because of its low sensitivity to aging.

Although the fastening device may be a one-piece fastening device, a two-piece fastening device is also possible. A first fastening portion (for example the C-shaped profile section) 10a may then be fastened to the manhole portion, and a second fastening portion (for example a bar) 10b may then be fastened to the measuring probe 2, as shown in Figure 2.

Alternatively or additionally, the fastening device may be attached to the cover.

The measuring probe can measure the cleanliness of the interior of the milk tank, the amount of liquid present in the milk tank, the temperature of the liquid present in the milk tank and/or the chemical composition (in particular the penicillin content) of the liquid present in the milk tank. This can take place in a contactless manner or by contact with the liquid. On the basis of the measured values, various decisions can be taken and/or certain checks can be carried out.

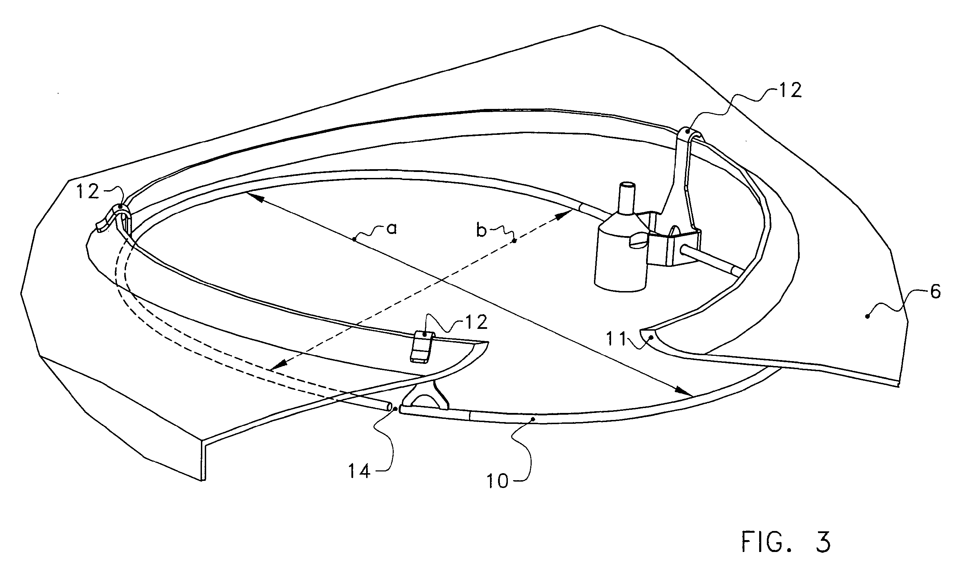

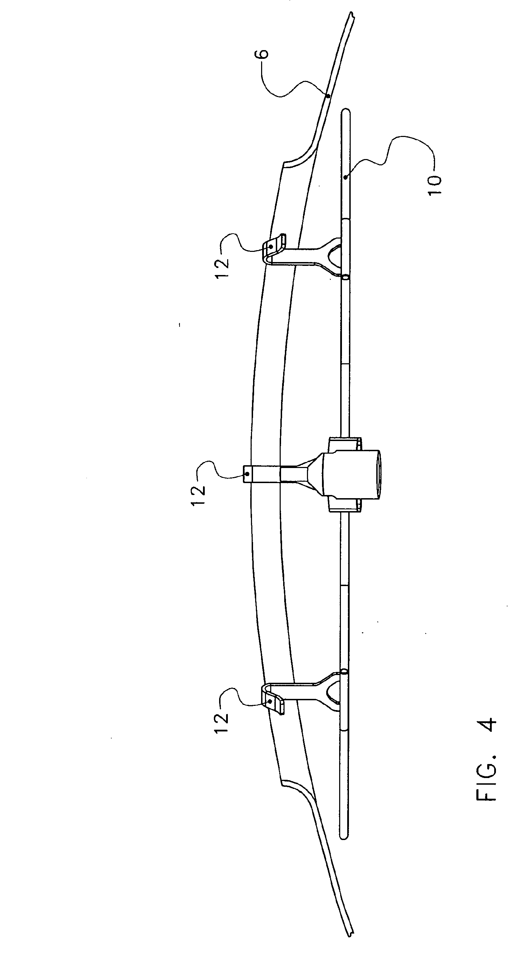

In Figures 3 and 4, the fastening device is designed as an oval profile section 10, the long axis a of the profile section being greater than the diameter of the manhole. Thus, undesired movement of the fastening device in a direction away from the milk tank is prevented, due to the fact that the profile section then comes in abutment against the inner wall of the milk tank. An interruption 14 simplifies the mounting of the fastening device to the milk tank, and so does a short axis b of the oval profile section, said axis b being smaller than the diameter of the manhole.

## Claims

1. An assembly of a milk tank and a measuring probe, the milk tank being provided with a space for containing milk and with a wall having a manhole portion defining a manhole, and the measuring probe extending into the space of the milk tank, **characterized in that** the assembly comprises a cover, **in that** the manhole can be closed by means of a cover, and **in that** the measuring probe can be fastened to the cover.

2. An assembly of a milk tank and a measuring probe, the milk tank being provided with a space for containing milk and with a wall having a manhole portion defining a manhole, and the measuring probe extending into the space of the milk tank, **characterized in that** the measuring probe comprises a float, so that the float with the measuring probe can float on liquid present in the milk tank.

3. An assembly of a milk tank and a measuring probe, the milk tank being provided with a space for containing milk and with a wall having a portion defining an aperture (different from a manhole), and the measuring probe extending into the space of the milk tank, **characterized in that** the assembly comprises a fastening device for fastening the measuring probe to at least a part of the portion.

4. An assembly as claimed in any one of the preceding claims, **characterized in that** the measuring probe is a measuring probe for measuring the cleanliness of the interior of the milk tank.

5. An assembly as claimed in any one of the preceding claims, **characterized in that** the measuring probe is a measuring probe for measuring the amount of liquid present in the milk tank.

6. An assembly as claimed in any one of the preceding claims, **characterized in that** the measuring probe is a measuring probe for measuring the temperature of the liquid present in the milk tank.

7. An assembly as claimed in any one of the preceding claims, **characterized in that** the measuring probe is a measuring probe for measuring the chemical composition of the liquid present in the milk tank.

8. An assembly as claimed in any one of the preceding claims, **characterized in that** the measuring probe is a measuring probe for measuring in a contactless manner the cleanliness, the amount, the temperature and/or the chemical composition of the liquid present in the milk tank.

9. An assembly of a milk tank and a measuring probe, the milk tank being provided with a space for containing milk and with a wall having a manhole portion defining a manhole, and the measuring probe extending into the space of the milk tank, **characterized in that** the measuring probe is suitable for measuring the penicillin content of the milk present in the milk tank.
